# FASCICULE DE BREVET EUROPEEN

(11) **EP 1 942 033 B1**
(45) Date de publication et mention de la délivrance du brevet: **17.04.2013**
(21) Numéro de dépôt: 07124001.4
(22) Date de dépôt: 21.12.2007
(51) Int. Cl.: B60R 19/34

(54) **Pièce d'appui pour système d'absorption de chocs destinée à être montée en bout d'un longeron d'un véhicule automobile**
Auflagerteil für Stoßdämpfersystem, das für die Montage am Ende eines Längsträgers eines Kraftfahrzeugs bestimmt ist
Support part for a shock-absorber system designed to be mounted on one end of a longitudinal beam for a vehicle

(30) Priorité: 28.12.2006 FR 0656032
(43) Date de publication de la demande: 09.07.2008
(73) Titulaire: Compagnie Plastic Omnium, 69007 Lyon (FR)
(72) Inventeur: GINJA, Stéphane, 01500, AMBERIEU EN BUGEY (FR); CHARNAUX, Sébastien, 01320, CHALAMONT (FR); CHERON, Hugues, 01800, MEXIMIEUX (FR)
(74) Mandataire: Remy, Vincent Noel Paul

(56) Documents cités:
- EP-A- 1 293 389
- EP-A2- 1 036 715
- EP-A2- 1 160 133
- EP-A2- 1 266 818

## Description

La présente invention concerne une pièce d'appui pour système d'absorption de chocs destinée à être montée en bout d'un longeron d'un véhicule automobile.

Dans la suite, on considère que le système d'absorption de chocs d'un véhicule automobile comprend les pièces du véhicule aptes à absorber de l'énergie lors d'un choc, notamment lors d'un choc haute vitesse. Ainsi, le système d'absorption peut comprendre une poutre transversale prenant appui sur les extrémités des longerons de la caisse en blanc du véhicule par l'intermédiaire d'absorbeurs de chocs, désignés « crash box ». On notera que les longerons font alors partie du système d'absorption de chocs. On rappelle qu'on appelle « caisse en blanc » du véhicule un ensemble structurel de ce véhicule, comportant un châssis, des longerons, ainsi que des montants latéraux des portes du véhicule.

En cas de choc, la poutre transversale peut travailler en flexion, si l'impact se trouve entre les deux longerons, ou sans flexion dans le cas où la poutre est trop rigide ou dans le cas où l'impact se produit au droit d'un longeron. Dans tous les cas, les absorbeurs sont sollicités pour se déformer en absorbant une partie la plus importante possible de l'énergie du choc de manière que les longerons soient épargnés et que le véhicule puisse être réparé sans intervention sur sa caisse en blanc. Une telle voie d'absorption de chocs classique, s'appuyant sur les longerons de la caisse en blanc, est dite « voie haute d'absorption ».

Une telle voie haute d'absorbtion est déja connue de l'état de la technique, notamment du document EP 1 419 936 A1.

Une telle voie haute permet de traiter des chocs frontaux haute vitesse (56 à 64 Km/h), ainsi que des chocs assurance. On rappelle qu'un choc « haute vitesse » correspond à un impact du véhicule contre un obstacle rigide ou déformable à une vitesse de 56 à 64 km/h, traité avec un objectif de protection des occupants du véhicule. Par ailleurs, un « choc assurance » est un choc du véhicule à environ 15 km/h contre un mur rigide, tel que celui connu sous le nom de Danner, ou encore « AZT », ou à environ 8 km/h contre un poteau (choc poteau, norme IIHS). Un tel choc est traité avec un objectif de réduction des coûts de réparations du véhicule et à fortiori de protection de la caisse en blanc du véhicule.

Certains véhicules comportent, en plus d'une telle voie haute d'absorption, une voie dite « voie basse d'absorption de chocs », s'appuyant sur des prolonges de berceau moteur, ou sur des petits longerons, sensiblement parallèles aux longerons de la voie haute mais situés à hauteur d'une poutre de choc piéton. Un berceau moteur comportant des prolonges est dit « berceau long », en opposition avec un berceau moteur ne comportant pas de prolonges, qui est dit « berceau court ».

Dans le cas d'un véhicule automobile muni d'une voie basse, le véhicule comporte également une deuxième poutre transversale de voie basse ainsi qu'un éventuel absorbeur prenant appui sur cette deuxième poutre transversale. Une telle voie basse permet de traiter à la fois les chocs piéton, et les chocs assurance. On rappelle qu'un « choc piéton » sur pare-chocs correspond à un choc d'un impacteur simulant la jambe d'un piéton lancé à 40 km/h sur le pare-chocs.

Une telle voie basse permet de répartir l'énergie à absorber en cas de choc entre cette voie basse et la voie haute classique passant par les longerons. L'absorption d'énergie, notamment en cas de choc assurance, peut alors être assurée sensiblement aux 2/3 par la voie haute et à 1/3 par la voie basse.

Néanmoins, on sait que certains véhicules ne disposent pas de prolonges de berceau pour assurer une voie basse en plus de la voie haute se trouvant à hauteur des longerons. Dans ce cas, il est habituellement nécessaire de fournir des absorbeurs de chocs plus longs sur la voie haute, permettant d'absorber une énergie suffisante en cas de choc assurance. Ces absorbeurs plus longs impliquent l'augmentation du porte-à-faux dans la direction longitudinale du véhicule, c'est-à-dire la longueur de la partie avant de ce véhicule entre les longerons et la peau de pare choc.

La présente invention propose de traiter les chocs assurance, même dans le cas d'un véhicule doté d'un berceau court, et cela sans augmenter le porte-à-faux du véhicule.

La présente invention a pour objet une pièce d'appui pour système d'absorption de chocs conforme à la revendication.

En effet, la pièce d'appui, comme elle s'étend sous la platine, augmente la surface de transmission d'effort aux longerons du véhicule. Elle permet ainsi de transmette les efforts à la voie haute d'absorption lors d'un choc assurance, tout en offrant une surface d'appui pour l'absorption d'énergie via la compression de l'absorbeur placé devant cette pièce d'appui en zone basse. Il en résulte que, dans le cas où le véhicule ne comporte pas de prolonges de berceau ou de longerons de voie basse, on peut absorber une énergie suffisante en cas de choc assurance, sans avoir besoin d'absorbeurs de chocs plus longs sur la voie haute.

L'invention est avantageuse notamment sur les véhicules où l'on dispose de longerons particulièrement solides, ce qui peut être le cas dans le cadre de la standardisation des caisses en blanc des véhicules (et donc des longerons). En effet, on profite alors de la solidité supérieure des longerons pour remplir, en plus de leur fonction classique, la fonction de transmission d'efforts que des prolonges de berceau rempliraient habituellement.

On notera que la pièce d'appui selon l'invention est conformée pour ne pas se déformer de façon irréversible lors d'un choc assurance, et se distingue donc d'une pièce d'appui qui serait destinée à résister uniquement à un choc piéton. En effet, le choc assurance requiert que la pièce d'appui reste intacte pour un effort allant jusqu'à 30 000 N.

Dans un mode de réalisation particulier de l'invention, la pièce d'appui comporte, en arrière de l'extension, un haubanage qui reporte sur une face inférieure ou latérale du longeron, ou bien à une pièce supplémentaire liée au longeron, les efforts subis lors de la compression de l'absorbeur. Cet haubanage, de préférence sous forme d'équerre, assure un renfort de la pièce d'appui, lui permettant de mieux résister au pliage ou à une autre déformation en cas de choc assurance.

Dans un mode de réalisation particulier de l'invention, la pièce d'appui est réalisée en matière plastique ou en matière plastique renforcée de fibres de verre. Cette pièce d'appui peut éventuellement être complétée par au moins un renfort métallique, destiné à renforcer la pièce d'appui pour contribuer à sa résistance à un choc assurance.

Ces renforts métalliques peuvent être surmoulés ou assemblés à la pièce en matière plastique après fabrication de celle-ci.

De préférence, la pièce d'appui comporte des moyens de fixation d'au moins un organe fonctionnel de véhicule automobile, tel qu'un absorbeur, une poutre de chocs, un radiateur, un avertisseur sonore, un boîtier électrique, un bocal lave glace, des éléments d'étanchéité pour le moteur. Ces moyens de fixation pourraient également être agencés sur l'absorbeur positionné devant la portée d'appui.

L'invention concerne également un système d'absorption de chocs pour véhicule automobile, comportant :
- au moins un longeron comprenant, dans son prolongement, une platine de fixation d'une poutre de choc transversale, et
- au moins une pièce d'appui, montée en bout du longeron,
**caractérisé en ce que** la pièce d'appui est une pièce d'appui telle que définie précédemment.

Un système d'absorption selon l'invention peut en outre comporter l'une ou plusieurs des caractéristiques suivantes.
- Le système d'absorption comporte au moins un absorbeur latéral, prenant appui sur sensiblement toute la hauteur de la pièce d'appui.
- Le système d'absorption comporte un absorbeur transversal supérieur, agencé prenant appui sur la poutre de choc transversale, un absorbeur transversal inférieur, prenant appui sur la portée d'appui de la pièce d'appui, ainsi que le ou les absorbeurs latéraux assurant une liaison rigide entre les absorbeurs transversaux supérieur et inférieur. En cas de choc assurance, de tels absorbeurs sont capables de se déformer plastiquement, en prenant appui sur la pièce d'appui et sur la poutre de chocs qui ne se déforment pas plastiquement.
- La pièce d'appui est fixée entre le longeron et la poutre de choc agencée en regard du longeron.
- La pièce d'appui est destinée à coopérer avec une voie basse d'absorption. En particulier, le système d'absorption comporte au moins une prolonge de berceau moteur, la pièce d'appui étant agencée de façon à pouvoir coopérer avec la prolonge en cas de choc pour lui transmettre au moins une partie de l'énergie du choc. Il en résulte que, sur des véhicules comportant deux voies d'absorption, la pièce d'appui permet de transmettre l'énergie du choc à la fois à la voie haute et à la voie basse.
- La pièce d'appui est fixée sur une prolonge de berceau.
- Le système d'absorption comporte deux pièces d'appui, chacune fixée à un longeron respectif du véhicule, les deux pièces d'appui étant reliées entre elles par au moins une traverse, notamment une traverse inférieure, destinée à traiter le choc piéton. Les pièces d'appui pourraient également être reliées par une traverse supérieure.

L'invention sera mieux comprise à la lecture de la description qui va suivre, donnée uniquement à titre d'exemple et faite en se référant aux dessins annexés dans lesquels :
la figure 1 est une vue en perspective éclatée d'un système d'absorption de chocs de véhicule automobile, comportant une pièce d'appui selon un premier mode de réalisation de l'invention ;
- la figure 2 est une vue similaire à la figure 1 selon un second mode de réalisation de l'invention
- les figures 3 et 4 sont des vues, respectivement en perspective et en coupe axiale, d'une pièce d'appui du système d'absorption de la figure 1 ;
- la figure 5 est une vue de face d'une partie du système d'absorption de la figure 1 ;
- la figure 6 est une vue similaire à celle de la figure 4 d'une pièce d'appui selon un exemple de variante de réalisation.

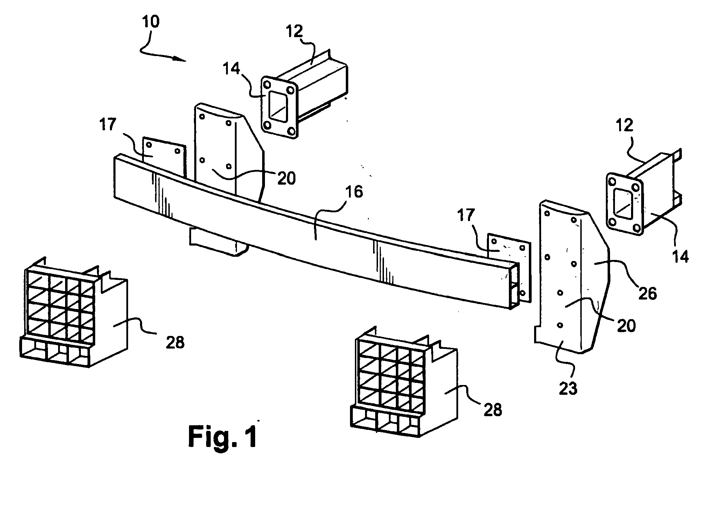

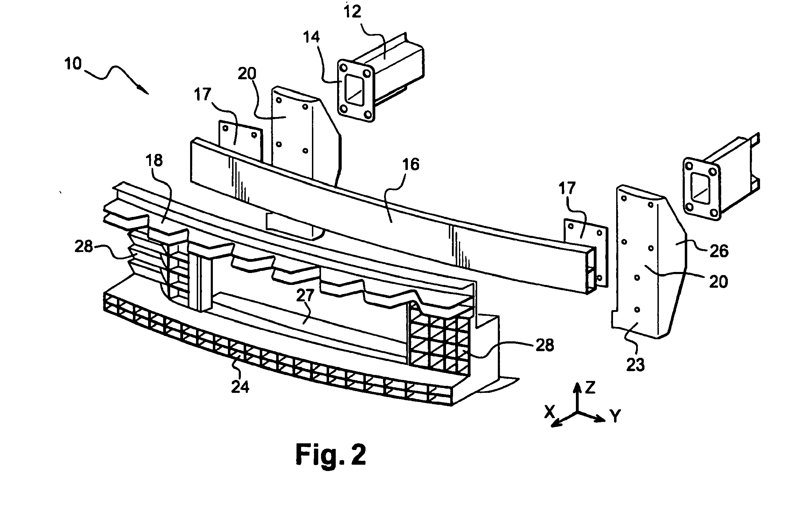

On a représenté sur les figures 1 et 2 un système d'absorption de chocs pour véhicule automobile, désigné par la référence générale 10.

Ce système d'absorption 10 est adapté pour être agencé sur un véhicule automobile, à l'avant d'un radiateur(non représenté) du véhicule automobile.

Le véhicule automobile comporte des longerons 12, chacun de ces longerons 12 comprenant, dans son prolongement, une platine de fixation 14 d'une poutre de chocs transversale 16 du système d'absorption 10.

En cas de choc assurance contre la poutre de chocs 16, cette dernière peut se déformer par flexion, de façon à absorber une partie de l'énergie. La poutre 16 permet également de transférer des efforts aux longerons 12.

Toutefois, afin d'absorber davantage l'énergie d'un choc, en plus des crash boxes 17 prévues entre la poutre 16 et les longerons 12, le système d'absorption comporte un absorbeur transversal supérieur 18, représenté sur la figure 2, agencé à la hauteur des longerons 12, en appui contre la poutre de chocs 16. Cet absorbeur transversal supérieur 18 est destiné à se déformer par compression contre la poutre de chocs 16 lors d'un choc.

L'absorbeur transversal supérieur 18, la poutre de chocs 16 et les longerons 12 forment une voie haute d'absorption du véhicule automobile.

Dans l'état de la technique, dans le cas où le véhicule ne comporte pas de voie basse, l'intégralité des efforts dus au choc est transmise à la voie haute. Afin d'absorber suffisamment le choc, il est alors nécessaire de prévoir un absorbeur transversal supérieur 18 de profondeur relativement importante, ce qui implique un porte-à-faux avant du véhicule, dans la direction longitudinale X, relativement élevé.

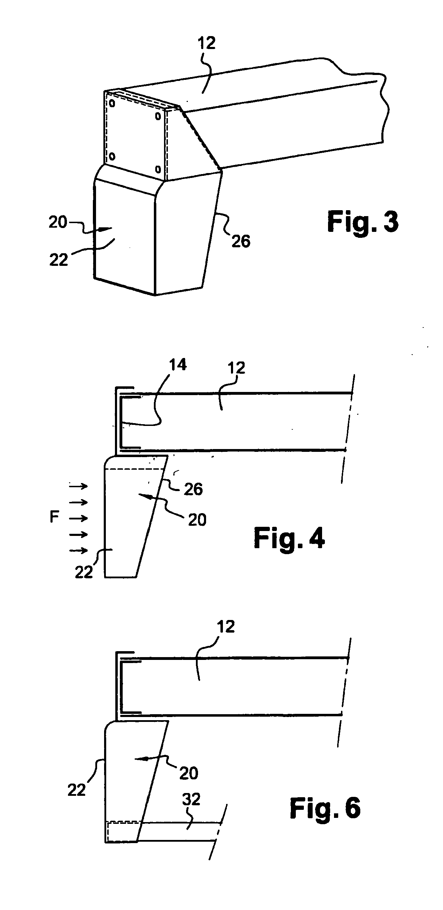

Afin de remédier à cet inconvénient, le système d'absorption 10 de l'invention est muni de deux pièces d'appui 20 pour absorbeur de chocs, détaillées sur les figures 3 et 4. Chacune de ces pièces d'appui 20 est montée en bout d'un longeron 12 respectif, et fixée entre ce longeron 12 et la poutre de chocs 16. De préférence, les pièces d'appui 20 sont réalisées en matière plastique ou en matière plastique renforcée de fibres de verre.

Chaque pièce d'appui 20 comprend une portée d'appui 22 pour un absorbeur latéral de chocs une poutre 28 d'absorption inférieure de chocs, agencé en regard de cette portée d'appui 22. Chaque portée d'appui 22 est agencée de façon à s'étendre sous la platine 14 du longeron 12 correspondant, et sensiblement parallèlement à cette platine 14.

Par ailleurs, chaque pièce d'appui 20 est conformée pour ne pas se déformer lorsque le véhicule est soumis à un choc assurance.

A cet effet, chaque pièce d'appui 20 comporte des moyens de renforts, tels que des nervures de renfort ou un renfort métallique, surmoulé ou assemblé à la pièce d'appui en matière plastique après fabrication de celle-ci. L'homme du métier sait conformer des moyens de renfort de façon qu'ils puissent résister à un effort prédéterminé, par exemple, dans le cas présent, à un effort correspondant à un choc assurance.

Chaque pièce d'appui comporte en outre un haubanage 26 agencé en arrière de la portée d'appui 22, apte à se fixer au longeron 12 de façon à reporter, sur une face inférieure ou latérale de ce longeron 12, les efforts subis par la portée d'appui 22.

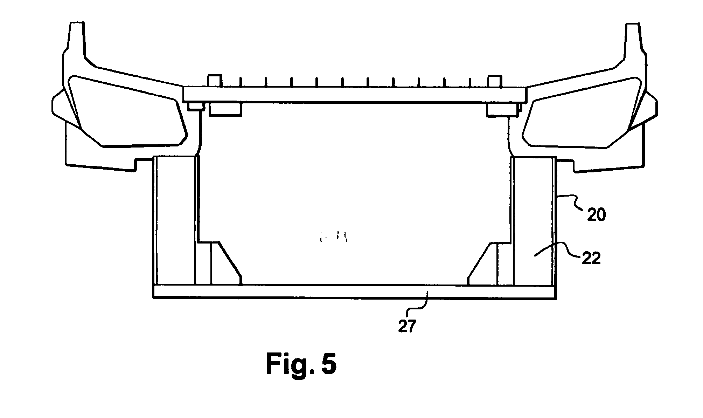

De préférence, les deux pièces d'appui 20 sont reliées entre elles par une traverse inférieure 27 destinée à traiter le choc piéton, comme cela est visible sur la figure 5. Cette traverse inférieure 27 forme un appui pour un absorbeur transversal inférieur 24, visible sur la figure 2, sur toute la longueur de la traverse 27.

L'absorbeur transversal inférieur 24, la traverse inférieure 27 et la partie inférieure de la pièce d'appui 20 forment ensemble une zone basse d'absorption d'effort, apte à transmettre les efforts correspondant aux chocs aux longerons 12. Ainsi, en cas de choc, les efforts correspondant au choc sont répartis entre l'absorbeur supérieur 18, l'absorbeur inférieur 24 et les absorbeurs latéraux 28.

De cette façon, contrairement à l'état de la technique, l'absorbeur transversal supérieur 18 ne représente pas la principale source d'absorption d'énergie et peut donc avoir une profondeur moins importante que dans l'état de la technique. Le porte-à-faux d'un véhicule comportant un système selon l'invention est donc réduit par rapport à celui d'un véhicule classique du type ne comportant pas de voie basse.

Les absorbeurs latéraux 28 assurent une liaison rigide entre les absorbeurs transversaux supérieur 18 et inférieur 24, de façon à former un « cadre absorbeur », prenant appui sur les pièces d'appui 20, la poutre de choc 16 et la traverse inférieure 27. Ce cadre absorbeur peut être rapporté pré-équipé sur le véhicule, ce qui allège la chaîne de montage du véhicule.

Dans le mode de réalisation de la figure 2, le système d'absorption du véhicule comprend notamment les longerons 12, la poutre de chocs 16, la traverse inférieure 27, les pièces d'appui 20 et le cadre absorbeur. Au cours d'un choc de type assurance, le cadre absorbeur est généralement déformé de façon irréversible, à la différence des éléments 12, 16, 20 et 27 ce qui limite les réparations à effectuer.

Selon une variante, la traverse inférieure 27 est préalablement montée sur le cadre absorbeur, le tout étant ensuite rapporté sur le véhicule.

On notera que les absorbeurs latéraux verticaux 28 permettent une répartition encore plus grande des efforts dus aux chocs.

Chaque absorbeur vertical 28 est généralement en appui sensiblement sur toute la hauteur d'une pièce d'appui 20 correspondante. L'extrémité inférieure de la pièce d'appui 20 sert également d'appui pour la traverse inférieure 27.

De préférence, la pièce d'appui 20 comporte des moyens de fixation pour au moins un organe fonctionnel de véhicule automobile. Par exemple, l'organe fonctionnel est un bocal de liquide pour laver les vitres, mais il pourrait en variante être un absorbeur, une poutre de chocs, un radiateur, un avertisseur sonore, un boîtier électrique, des éléments d'étanchéité pour le moteur. On peut également prévoir d'agencer des organes fonctionnels sur les absorbeurs 18, 24 ou 28, de façon à pouvoir les monter sur ces absorbeurs en dehors de la chaîne de montage du véhicule.

On notera enfin que l'invention n'est pas limitée aux modes de réalisation précédemment décrits, mais englobe toute variante reprenant, avec des moyens équivalents, ses caractéristiques essentielles.

En effet, en variante représentée sur la figure 6, les pièces d'appui 20 pourraient tout aussi bien être agencées sur des véhicules comportant des prolonges 32 de berceau moteur, afin de faire passer une partie des efforts en cas de chocs aux longerons 12 du véhicule et l'autre partie aux prolonges 32.

Dans ce cas, la pièce d'appui 20 est agencée de façon à pouvoir coopérer avec la prolonge 32 en cas de choc pour lui transmettre une partie de l'énergie du choc. De préférence, la pièce d'appui 20 et la prolonge 32 de berceau moteur sont fixées ensemble, comme cela est représenté sur la figure 6, par exemple à l'aide de moyens de fixation agencés sur la pièce d'appui 20.

## Revendications

1. Système (10) d'absorption de chocs pour véhicule automobile, comportant :
- au moins un longeron (12) comprenant, dans son prolongement, une platine de fixation (14) d'une poutre de choc transversale (16),
- au moins une pièce d'appui (20), montée en bout du longeron (12),
- un absorbeur transversal supérieur (18), agencé prenant appui sur la poutre de choc transversale (16), et
- un absorbeur transversal inférieur (24),
**caractérisé en ce que** le système comporte au moins un absorbeur de choc dit latéral (28),**en ce que** la pièce d'appui (20) comprend une portée d'appui (22) pour l'absorbeur de chocs latéral (28) positionné devant cette portée d'appui (22), la portée d'appui (22) étant agencée de façon à s'étendre sous la platine (14) et sensiblement parallèlement à celle-ci lorsque la pièce d'appui (20) est montée en bout du longeron (12), la pièce d'appui (20) étant conformée pour ne pas se déformer de façon irréversible, lorsque le véhicule est soumis à un choc assurance, **en ce que** l'absorbeur de choc latéral (28) prend appui sur sensiblement toute la hauteur de la pièce d'appui (20), **en ce que** l'absorbeur transversal inférieur (24) prend appui sur la portée d'appui (22) de la pièce d'appui, et **en ce que** le ou les absorbeurs latéraux (28) assurent une liaison rigide entre les absorbeurs transversaux supérieur (18) et inférieur (24).

2. Système d'absorption de chocs (10) selon la revendication 1, dans lequel la pièce d'appui (20) est fixée entre le longeron (12) et la poutre de choc (16) agencée en regard du longeron (12).

3. Système d'absorption de chocs (10) selon l'une quelconque des revendications 1 ou 2, dans lequel la pièce d'appui est destinée à coopérer avec une voie basse d'absorption, notamment une prolonge (32) de berceau moteur.

4. Système d'absorption de chocs (10) selon la revendication 3, dans lequel la pièce d'appui (20) et la prolonge de berceau moteur sont fixées ensemble.

5. Système d'absorption de chocs (10) selon l'une quelconque des revendications1 à 4, comportant deux pièces d'appui (20), chacune fixée à un longeron (12) respectif du véhicule, les deux pièces d'appui (20) étant reliées entre elles par au moins une traverse, notamment une traverse inférieure (27).

6. Système d'absorption de chocs (10) selon l'une quelconque des revendications précédentes, dans lequel la pièce d'appui (20) comporte, en arrière de la portée d'appui (22), un haubanage (26) apte à se fixer au longeron (12) de façon à reporter sur une face inférieure ou latérale de ce longeron, ou à une pièce de liaison fixée sur le longeron, les efforts subis lors d'une compression de l'absorbeur (28).

7. Système d'absorption de chocs (10) selon l'une quelconque des revendications précédentes, dans lequel la pièce d'appui (20) est réalisée en matière plastique ou en matière plastique renforcée de fibres.

8. Système d'absorption de chocs (10) selon l'une quelconque des revendications précédentes, dans lequel la pièce d'appui (20) comporte au moins un renfort métallique, surmoulé ou assemblé à la pièce d'appui (20) en matière plastique après fabrication de celle-ci.

9. Système d'absorption de chocs (10) selon l'une quelconque des revendications précédentes, dans lequel la pièce d'appui (20) comporte des moyens de fixation d'au moins un organe fonctionnel du véhicule automobile, tel qu'un absorbeur, une poutre de chocs, un radiateur, un avertisseur sonore, un boîtier électrique, un bocal lave glace, des éléments d'étanchéité pour le moteur.

## Claims

1. Impact-absorbing system (10) for motor vehicle, comprising:
- at least one side member (12) comprising, in its extension, a plate (14) for mounting a transverse impact beam (16), and
- at least one supporting piece (20), mounted at the end of the side member (12),
- an upper transverse absorber (18), resting on the transverse impact beam (16), and
- a lower transverse absorber (24),
**characterised in that** the system comprises at least one so-called lateral absorber (28), **in that** the supporting piece (20) comprises a bearing surface (22) for the lateral impact absorber (28) positioned in front of this bearing surface (22), the bearing surface (22) being arranged in such a way as to extend under the plate (14) and substantially parallel thereto when the supporting piece (20) is mounted at the end of the side member (12), the supporting piece (20) being shaped in such a way that it does not deform irreversibly when the vehicle suffers an insurance impact, **in that** the lateral absorber (28), rests substantially over the entire height of the supporting piece (20), **in that** the lower transverse absorber (24) rests on the bearing surface (22) of the supporting piece, and **in that** the lateral absorber(s) form a rigid link between the upper (18) and lower (24) transverse absorbers.

2. Impact-absorbing system (10) according to claim 1, wherein the supporting piece (20) is attached between the side member (12) and the impact beam (16) positioned opposite the side member (12).

3. Impact-absorbing system (10) according to claim 1 or 2, wherein the supporting piece is intended to cooperate with a lower absorption structure, in particular an engine cradle extension (32).

4. Impact-absorbing system (10) according to claim 3, wherein the supporting piece (20) and the engine cradle extension are attached together.

5. Impact-absorbing system (10) according to any of claims 1 to 4, comprising two supporting pieces (20), each attached to a respective side member (12) of the vehicle, the two supporting pieces (20) being connected together by at least one cross member, in particular a lower cross member (27).

6. Impact-absorbing system (10) according to any of the preceding claims, wherein the supporting piece (20) comprises, behind the bearing surface (22), a tie (26) that can be attached to the side member (12) so as to transfer, to a lower or lateral side of this side member or to a connection piece attached thereto, the forces imposed during compression of the absorber (28).

7. Impact-absorbing system (10) according to any of the preceding claims, wherein the supporting piece (20) is made from plastic or glass fibre reinforced plastic

8. Impact-absorbing system (10) according to any of the preceding claims, wherein the supporting piece (20) comprises at least one metal stiffener, overmoulded or attached to the plastic supporting piece (20) after manufacture.

9. Impact-absorbing system (10) according to any of the preceding claims, wherein the supporting piece (20) comprises means for attaching at least one motor vehicle functional unit, such as an absorber, an impact beam, a radiator, a horn, an electric box, a windscreen washer bottle or sealing components for the engine.

## Patentansprüche

1. Stoßdämpfersystem (10) für Kraftfahrzeug, das aufweist:
- wenigstens einen Längsträger (12), der in seiner Verlängerung eine Befestigungsplatte (14) eines Queraufprallträgers (16) aufweist,
- wenigstens ein Auflagerteil (20), das an dem Ende des Längsträgers (12) installiert ist,
- einen oberen Querstoßdämpfer (18), der an dem Queraufprallträger (16) anliegend eingerichtet ist, und
- einen unteren Querstoßdämpfer (24),
**dadurch gekennzeichnet, dass** das System wenigstens einen so genannten seitlichen Stoßdämpfer (28) aufweist, dass das Auflagerteil (20) eine Auflagerfläche (22) für den seitlichen Stoßdämpfer (28) aufweist, der vor dieser Auflagerfläche (22) positioniert ist, wobei die Auflagerfläche (22) derart eingerichtet ist, dass sie sich unter der Platte (14) und im Wesentlichen parallel zu dieser erstreckt, wenn das Auflagerteil (20) am Ende des Längsträgers (12) installiert ist, wobei das Auflagerteil (20) ausgebildet ist, um sich nicht irreversibel zu verformen, wenn das Fahrzeug einem Sicherheitsstoß ausgesetzt ist, dass der seitliche Stoßdämpfer (28) im Wesentlichen an der gesamten Höhe des Auflagerteils (20) anliegt, dass der untere Querstoßdämpfer (24) an der Auflagerfläche (22) anliegt, und dass der oder die seitlichen Stoßdämpfer (28) eine starre Verbindung zwischen dem oberen (18) und unteren Querstoßdämpfer (24) sicherstellen.

2. Stoßdämpfersystem (10) nach Anspruch 1, bei dem das Auflagerteil (20) zwischen dem Längsträger (12) und dem Aufprallträger (16), der gegenüber dem Längsträger (12) eingerichtet ist, befestigt ist.

3. Stoßdämpfersystem (10) nach einem der Ansprüche 1 oder 2, bei dem das Auflagerteil dazu bestimmt ist, mit einer unteren Absorptionsschiene zusammenzuwirken, insbesondere mit einer Verlängerung (32) der Motoraufhängung.

4. Stoßdämpfersystem (10) nach Anspruch 3, bei dem das Auflagerteil (20) und die Verlängerung der Motoraufhängung gemeinsam befestigt sind.

5. Stoßdämpfersystem (10) nach einem der Ansprüche 1 bis 4, das zwei Auflagerteile (20) aufweist, die jeweils an einem jeweiligen Längsträger (12) des Fahrzeugs befestigt sind, wobei die zwei Auflagerteile (20) miteinander durch wenigstens einen Querträger, insbesondere einen unteren Querträger (27) verbunden sind.

6. Stoßdämpfersystem (10) nach einem der vorhergehenden Ansprüche, bei dem das Auflagerteil (20) rückwärts von der Auflagerfläche (22) eine Verspannung (26) aufweist, die geeignet ist, um sich an dem Längsträger (12) derart befestigen, dass die Kräfte, die bei einem Zusammendrücken des Stoßdämpfers (28) einwirken, auf eine untere oder seitliche Fläche dieses Längsträgers oder auf einen Verbindungsteil, der an dem Längsträger befestigt ist, übertragen werden.

7. Stoßdämpfersystem (10) nach einem der vorhergehenden Ansprüche, bei dem das Auflagerteil (20) aus Plastik oder aus faserverstärktem Plastik hergestellt ist.

8. Stoßdämpfersystem (10) nach einem der vorhergehenden Ansprüche, bei dem das Auflagerteil (20) wenigstens eine Metallverstärkung aufweist, die an dem Auflagerteil (20) aus Plastik nach dessen Herstellung abgeformt oder angebaut wird.

9. Stoßdämpfersystem (10) nach einem der vorhergehenden Ansprüche, bei dem das Auflagerteil (20) Mittel zum Befestigen wenigstens eines funktionalen Elements des Kraftfahrzeugs aufweist, wie zum Beispiel eines Stoßdämpfers, eines Stoßbalkens, eines Kühlers, einer Hupe, eines Elektrogehäuses, eines Behälters für Scheibenwaschanlagenflüssigkeit, Dichtelementen für den Motor.
